(19) Europäisches Patentamt
European Patent Office
Office européen des brevets

(11) Veröffentlichungsnummer: **0 019 665**
**B2**

(12) # NEUE EUROPÄISCHE PATENTSCHRIFT

(45) Veröffentlichungstag der neuen Patentschrift: **16.12.87**

(51) Int. Cl.⁴: **C 09 K 19/08,** C 09 K 19/20, C 07 C 121/75

(21) Anmeldenummer: **79200259.4**

(22) Anmeldetag: **28.05.79**

(54) **Flüssigkristalline Verbindungen.**

(43) Veröffentlichungstag der Anmeldung:
**10.12.80 Patentblatt 80/25**

(45) Bekanntmachung des Hinweises auf die Patenterteilung:
**25.07.84 Patentblatt 84/30**

(45) Bekanntmachung des Hinweises auf die Entscheidung über den Einspruch:
**16.12.87 Patentblatt 87/51**

(84) Benannte Vertragsstaaten:
**CH DE GB**

(56) Entgegenhaltungen:
**DE-A-2 356 085**
**DE-A-2 429 093**
**DE-A-2 613 293**
**DE-A-2 752 975**
**FR-A-2 181 943**
**FR-A-2 347 427**
**FR-A-2 361 353**
**FR-A-2 377 376**
**FR-A-2 400 545**
**GB-A-1 433 130**
**US-A-3 923 857**
**US-A-3 953 491**
**US-A-3 984 344**

**Die Akte enthält technische Angaben, die nach dem Eingang der Anmeldung eingereicht wurden und die nicht in dieser Patentschrift enthalten sind.**

(73) Patentinhaber: **Merck Patent Gesellschaft mit beschränkter Haftung, Frankfurter Strasse 250, D-6100 Darmstadt (DE)**

(72) Erfinder: **Osman, Maged A., Dr., Lerchenrain 1, Zürich (CH)**

**EP 0 019 665 B2**

LIBER, STOCKHOLM 1987

**Beschreibung**

Die Erfindung betrifft anisotrope Verbindungen sowie flüssigkristalline Mischungen (FK-Mischungen), welche diese Verbindungen enthalten und als Dielektrikum für Flüssigkristallanzeigen vervendet werden.

Die meisten bekannten FK-Verbindungen entsprechen den Formel (10) oder (11)

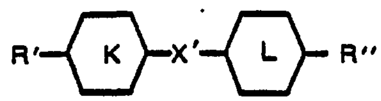

(10)

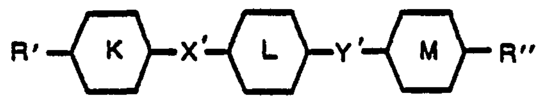

(11)

in welchen die Ringe K, L und gegebenenfalls M Benzol-, trans-Cyclohexyloder heterocyclische Ringe sind, X' und gegebenenfalls Y' Direktbindungen oder/und Carboxylgruppen oder/und Azomethingruppen und R', R'' Alkyl-, Alkoxy-, Alkylamino-, Alkylcarbonyloxy- oder Nitrilgruppen sind.

Als repräsentativ für diesen Stand der Technik sind die DE-OS-2 306 738, 2 306 739, 2 545 121, 2 636 684 und 2 701 591 sowie die entsprechenden Zusammenstellungen in "Flüssige Kristalle in Tabellen" von D. Demus et al., Leipzig 1974, zu nennen.

Für FK-Feldeffektdrehzellen ist es allgemein bekannt, dass hierfür als Dielektrikum eine nematische FK-Mischung mit ausreichend hoher positiver DK-Anisotropie zweckmässig ist, wozu in die Verbindungen (10) und (11) Substituenten mit grossen Dipolmomenten parallel zur Längsachse der Moleküle eingebaut werden. Die DK-Anistropie ($\Delta\varepsilon$) ist bekanntlich die Differenz der Dipolmomente normal ($\varepsilon_\perp$) und parallel ($\varepsilon_{\parallel}$) zur Molekülachse, d.h.

$$\Delta\varepsilon = \varepsilon_{\parallel} - \varepsilon_{\perp}$$

Typisch ist daher R' beispielsweise eine Alkyl- oder Alkoxygruppe, während R'' die Nitril-, Alkyl- oder Alkoxygruppe bedeutet.

Bedingt durch diese Struktur und die Beiträge der Substituenten senkrecht zur Molekülachse ergibt sich dadurch ein $\varepsilon_\perp$ von ca 5, wobei $\varepsilon_{\parallel}$ z. B. etwa 5 betragen oder von 20-30 variiert werden kann. Dies ist in der Literatur von verschiedenen Autoren bestätigt worden (siehe z. B. L. Pohl et al., Phys. Lett. 60 A, 421 (1977); A. Boller et al., Mol. Cryst. Liq. Crys. 42, 215 (1977); R. T. Klingbiel et al., J. Am. Soc. 96 (25), 7651 (1974)).

Der Einbau von Cyclohexanringen in die Strukturen (10) und (11) hat gegenüber den Benzolringen den Vorteil einer erniedrigten Viskosität, begünstigt aber die nachteilige Tendenz zur Bildung smektischer Phasen und erniedrigt den sogenannten $\Delta n$-Wet, der analog wie $\Delta\varepsilon$ aus den Unterschieden der Brechungsindizes senkrecht und parallel zur Molekülachse bestimmt wird.

Für kommerzielle FK-Anzeigen werden FK-Mischungen mit bestimmten, betriebsmässig bedingten Schwellspannungen bzw. bestimmten positiven $\Delta\varepsilon$-Werten, z. B. von 1 bis 10 oder mehr, benötigt. Dies kann gemäss Stand der Technik heute nur durch Mischen von Komponenten, die grosse $\Delta\varepsilon$-Werte besitzen, und Komponenten, die sehr kleine $\Delta\varepsilon$-Werte haben, erreicht werden, was wiederum die Tendenz zur Bildung smektischer Phasen begünstigt, was von mehreren Autoren bestätigt wurde (siehe G. Heppke et al., Z. Naturforsch. 33a, 185 (1978) und B. Engelen et al., Ann Phys. (Paris) 3, 403 (1978)). Eine Vergrösserung des $\varepsilon_\perp$-Wertes des unter Erhaltung des $\Delta\varepsilon$-Wertes der für den Schwellspannungswert erforderlich ist, wird gewünscht (siehe z. B. A. R. Kmetz, SJD Digest, Techn. Papers IX, 70 (1978)).

Mit den bisher bekannten FK-Substanzen (10), (11) lässt sich dies aber nicht erreichen, weil nur solche nematische FK-Substanzen mit positivem $\Delta\varepsilon$-Wert bekannt sind, deren, $\varepsilon_\perp$-Werte um 5 liegen. Das Problem wurde bisher dadurch umgangen, dass man nematische FK-Substanzen, die positive $\Delta\varepsilon$-Werte haben, mit Komponenten vermischt, die einen negativen $\Delta\varepsilon$-Wert besitzen, was wiederum zu relativ hohen Schwellspannungswerten und häufig auch zum Auftreten smektischer Phasen führt.

Aus der DE-A-2 613 293 ist es bekannt, bei Verbindungen der Formel

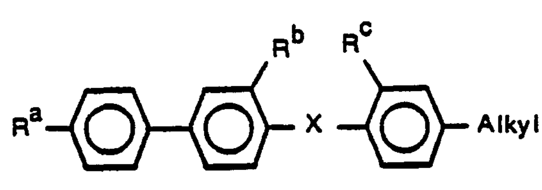

worin X -CO-O-, O-CO-, -CO-S- oder -S-CO- bedeutet, entweder in die Position der Seitengruppe $R^a$ oder in die eine der beiden lateralen Positionen $R^b$, $R^c$ eine Nitrilgruppe zu setzen, wodurch im ersten Fall ($R^a$=CN) eine

positive DK-Anisotropie und im zweiten Fall ($R^b$ oder $R^c = CN$) eine negative DK-Anistropie des Moleküls erzielt wird. Dies bringt aber ebenfalls keine Lösung des oben erläuterten Problems, weil man wiederum Mischungen von Verbindungen mit positiver und mit negativer DK-Anisotropie, d.h. mit sehr unterschiedlichen $\Delta\varepsilon$-Werten, verwenden und die oben erwähnten Nachteile solcher Mischungen in Kauf nehmen müsste.

In den Dokumenten GB-A-1 433 130 und DE-A-2 356 085 sind Formeln angegeben, die Bi- oder Polyphenyle mit lateralem Halogensubstituenten umfassen. Das oben erläuterte Problem kann jedoch durch laterale Substitution in diesen Bi- oder Polyphenylverbindungen ebenfalls nicht gelöst werden, da der Einsatz dieser Verbindungen in FK-Mischungen nicht ausreicht, die Tendenz zur Bildung smektischer Phasen zu vermindern.

Aufgabe der Erfindung ist es, das oben genannte Problem ohne Verwendung von Substanzen mit sehr unterschiedlichen $\Delta\varepsilon$-Werten zu lösen, insbesondere um die Tendenz zur Bildung smektischer Phasen zu vermindern bzw. auszuschalten. Erfindungsgemäss wird dieses Problem mit Verbindungen der unten angegebenen Formel (1) gelöst, die eine Variation der $\varepsilon_{\perp}$-Werte oberhalb des Wertes 5 und damit eine wesentlich verbesserte Anpassung an die Betriebserfordernisse durch freiere Variation der $\Delta\varepsilon$-Werte, d.h. nicht allein durch Variation von $\varepsilon_{||}$ gestatten.

Die Aufgabe wird erfindungsgemäß gelöst durch anisotrope Verbindungen der Formel (1)

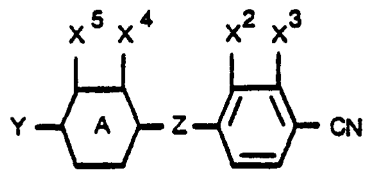

(1)

in welcher $X^2$ bis $X^5$ Wasserstoffatome, Halogenatome oder Nitrilgruppen sind mit der Maßgabe, daß mindestens eine dieser Gruppen ein Halogenatom oder die Nitrilgruppe ist, Z eine Kovalenzbindung oder die Carboxylgruppe -C(O)O-, der Kern A ein Benzol- oder trans-Cyclohexanring und Y eine Gruppe R,

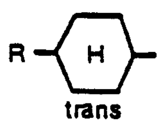

oder

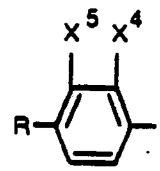

ist, worin R eine Alkylgruppe mit 1 bis 12 C-Atomen oder eine Alkoxygruppe mit 1 bis 12 C-Atomen ist, und $X_4$, und $X_5$ Wasserstoffatome, Halogenatome oder Nitrilgruppen sind und Z die Carboxylgruppe -C(O)O- bedeutet, wenn der Kern A einen Benzolring und Y entweder eine Gruppe R oder

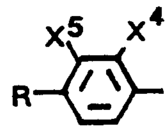

bedeutet.

Die Bezeichnung "anisotrop" bedeutet hierbei, dass eine gegebene Verbindung enantiotrop flüssigkristallin oder potentiell flüssigkristallin ist; potentiell flüssigkristallin ist eine Verbindung dann, wenn sie (a) entweder in der Schmeze unterkühlbar und im unterkülten Zustand flüssigkristallin ist (monotrop flüssigkristallin), oder (b) bei Bestimmung des $T_c$ einer Mischung aus der potentiell flüssigkristallinen Verbindung und einer enantiotrop flüssigkirstallinen Verbindung eine z. B. durch Extrapolation nachweisbare Mesophase zeigt.

Eine bevorzugte Gruppe erfindungsgemässer Verbindungen (1) entspricht der Formel (2)

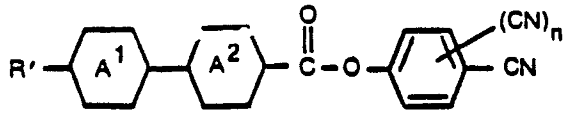

(2)

in der $R^1$ eine Alkyl- oder Alkoxygruppe mit 1-12 C-Atomen ist, die Ringe $A^1$ und $A^2$ gleich oder verschieden sind und Benzolringe oder trans-Cyclohexanringe bedeuten und n 1 oder 2 bedeutet.

Ebenfalls bevorzugt werden Verbindungen (1) der Formel (3)

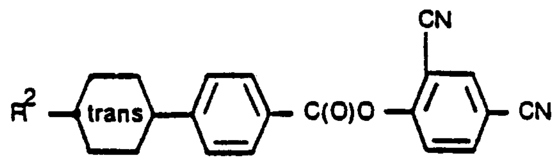

(3)

in der $R^2$ eine Alkylgruppe mit 1 bis 12 C-Atomen ist.

Vorteilhaft sind auch Verbindungen (1) der Formel (4)

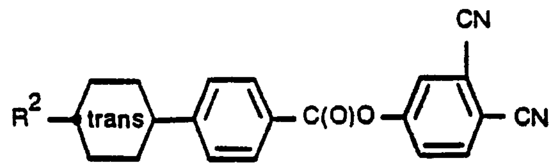

(4)

in der $R^2$ eine Alkylgruppe mit 1 bis 12 C-Atomen ist.

Schliesslich sind erfindungsgemäss auch Verbindungen (1) der Formel (5) vorteilhaft

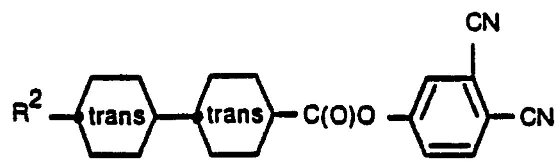

(5)

in der $R^2$ eine Alkylgruppe mit 1 bis 12 C-Atomen ist.

Als bevorzugte Beispiele für die n-Alkylgruppe $R^2$ in den Formen (3), (4) und (5) sind solche mit mittleren Kettenlängen z. B. von 3 bis 7 C-Atomen, zu nennen und n-Pentyl ist hierfür typisch.

Die bevozugten Verbindungen der Forme (1) sind insbesondere nach folgenden Syntheseschemata erhältlich:

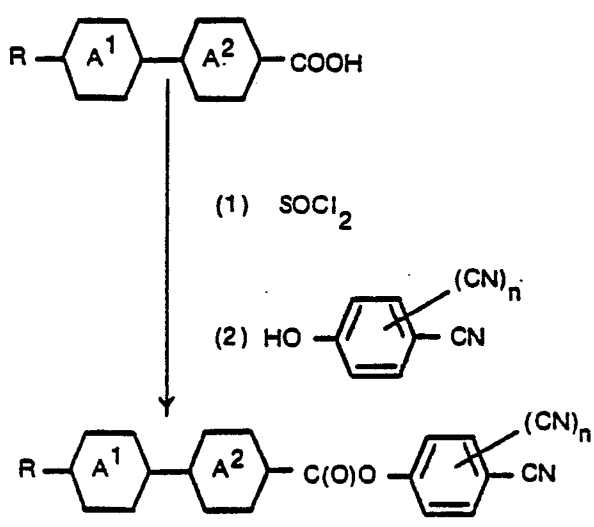


wobei die Zeichen die oben zu Formel (2) angegebene Bedeutung haben.

Verbindungen der Formel (1), in welcher Z eine direkte Bindung (Einfachbindung) bedeutet, sind in analoger Weise wie in den oben genannten DE-OS-2 636 684 bzw. 2 701 591 beschrieben erhältlich, jedoch unter Verwendung entsprechend modifizierter Verbindungen für die mit $X^2$ bis $X^5$ substituierten Kerne.

Die Verbindungen der Formel (1), in welchen Z eine Kovalenzbindung ist, können in üblicher Weise durch Halogenieren, z. B. Bromieren der entsprechenden Kohlenwasserstoffverbindungen (siehe z. B. G.Sundström et al., The Science of Total Environment", Band 6 (1976), Seten 15-29), erhalten bzw. durch Umsetzung der so erhaltenen Halogen- bzw. Bromderivate mit CuCN in N-Methylpyrrolidon in an sich bekannter Weise (G. W. Gray et al., J. Chem. Soc., Perkin Transactions, Band 2 (1976), Seite 97) in die entsprechenden Nitrilverbindungen umgewandelt werden.

In der folgenden Tabelle I sind Beispiele erfindungsgemässer Verbindungen der Formel (2) mit den entsprechenden Kennwerten gegeben. Die Herstellung der Verbindungen werden weiter unten erläutert.

**Tabelle I**
Erfindungsgemässe
Verbindung der Formel (2)

| Nr. | $R^{1*}$ | $A^1$ | $A^2$ | $(CN)_n$ | $T_m$(°C) | $T_c$(°C) | $\varepsilon_{\parallel}$ | $\varepsilon_{\perp}$ |
|---|---|---|---|---|---|---|---|---|
| 1 | $_nC_5H_{11}$ | Cyclohexyl | Phenyl | 2-CN | 132,2 | 178,7 | 11,0 | 7,8 |
| 2 | $_nC_5H_{11}$ | Cyclohexyl | Phenyl | 3-CN | 85,2 | 143,9 | 28,2 | 7.5 |
| 3 | $_nC_5H_{11}$ | Cyclohexyl | Cyclohexyl | 3-CN | 96,8 | 165,5 | 16,4 | 5,5 |

Bemerkung:*die spezielle Alkylgruppe $R^1$ ist zwischen $C_1$ und $C_{12}$ variierbar oder kann durch H ersetzt werden, ohne dass sich die Verbindungscharakteristik wesentlich ändert; die Verbindungen Nrn. 1-3 stellen daher bevozugte Typen erfindungsgemässer Verbindungen dar, die keineswegs auf spezielle $R^1$-Gruppen beschränkt sind.

Im folgenden werden Beispiele für die Herstellung erfindungsgemässer Verbindungen nach an sich bekannten Verfahren gegeben.

**Beispiel 1**

p-(4-trans-n-Pentylcyclohexyl)-benzoesäure (10g, 36,5 mM) wurde mit Thionylchlorid (50 ml) 1 Std. unter Rückfluss gekocht. Das entstandene Säurechlorid wurde von überschüssigem Thionylchlorid befreit. Das Säurechlorid wurde zu einer Lösung von 5,3 g (36,5 mM) 2,4-Dicyanophenol (F 230°C, Zers.) in 100 ml Pyridin zugetropft. Nach Beendigung der Reaktion wurde das Gemisch in überschüssige verdünnte Salzäure gegossen und mit Methylenchlorid extrahert.

Das Produkt wurde aus der organischen Phase durch Eindampfen des Lösungsmittels erhalten. Zur Renigung wurde das Rohprodukt unter Vakuum destilliert (250°C/0,02 Torr) und anschliessend aus Benzo/Hexan umkristallisiert, F 132,2°C, $T_c$ 178,7°C (Klärpunkt).

Die erhaltene Verbindung ist die Verbindung Nr. 1 von Tabelle I oben; die Verbindung ist nematischflüssigkristallin.

**Beispiel 2**

p-(4-trans-n-Pentylcyclohexyl)-benzoesäure (10 g, 36,5 mM) wurde mit Thionylchlorid (50 ml) 1 Std. unter Rückfluss gekocht. Das überschüssige Thionylchlorid wurde destilliert. Das entstandene Säurechlorid wurde zu einer Lösung von 5,3 g (36,5 mM) 3,4-Dicyanophenol (F 158°C) in 100 ml Pyridin zugetropft. Die Reaktionsmischung wurde über Nacht gerührt und dann auf verdünnte Salzsäure gegossen. Das Produkt wurde mit Methylenchlorid extrahiert. Zur Reinigung wurde das Produkt aus Hexan umkristallisiert (F 85,2°C; $T_c$ 143,9°C). Die erhaltene Verbindung ist die Verbindung Nr. 2 von Tabelle I. Sie zeigt eine enantiotrope nematische Phase.

**Beispiel 3**

4-trans-(4'-trans-n-Pentylcyclohexyl)-cyclohexancarbonsäure (7 g, 25 mM) wurde mit Thionylchlorid (40 ml) 30 min aus Rückflusstemperatur, erwärmt. Das entstandene Säurechlorid wurde vom überschüssigen Thionylchlorid befreit. Das so gewonnene Säurechlorid wurde nun zu einer Lösung von 3,4-Dicyanophenol (3,5 g; 25 mM) in 100 ml Pyridin bei 0°C zugetropft. Nach Beendigung der Reaktion wurde die Reaktionsmischung wie in Bespiel 2 aufgearbetet. Das Produkt wurde aus Hexan umkristallisiert (F 96,8°C, $T_c$ 165,5°C) und ist die Verbindung Nr. 3 von Tabelle I; die Verbindung ist nematisch-enantiotrop.

**Beispiele 4-6**

Nach der Arbeitsweise von Beispiel 1 wurden die der Verbindung Nr. 1 von Tabelle I entsprechenden Homologen ($R^1=H$; $R^1=CH_3$; $R^1=nC_{12}H_{25}$) hergestellt.

**Bespiele 7-10**

Nach der Arbetsweise von Beispiel 2 wurden die der Vebindung Nr. 2 von Tabelle I entsprechenden Homologen ($R^1 = H$; $R^1 = CH_3$; $R^1 = nC_{12}H_{25}$) hergestellt.

**Beispiele 11-13**

Nach der Arbeitsweise von Beispiel 3 wurden die der Verbindung Nr. 3 von Tabelle I entsprechenden Homologen ($R^1 = H$; $R^1 = CH_3$; $R^1 = nC_{12}H_{25}$) hergestellt.

Alle nach den Bespielen 1-13 hergestellten erfindungsgemässen Verbindungen erweisen sich als anisotrop (flüssigkristallin bzw. potentiell flüssigkristallin) im Sinne der oben gegebenen Definition. Die Werte von $\varepsilon_{||}$, bzw, von $\varepsilon_{\perp}$ der Verbindungen der Beispiele 4-13 waren den Werten der jeweils strukturell entsprechenden Verbindungen der Beispiele 1-3 ähnlich, wobei sich die absoluten Werte geringfügig mit der Länge der Alkylkette änderten (d.h. etwas höhere absolute Werte mit abnehmender Länge der Alkylkette); die Verhältniswerte $\varepsilon_{||}/\varepsilon_{\perp}$ blieben jedoch in jeder Strukturgruppe, die einer der Verbindungen Nrn. 1-3 von Tabelle 1 mit unterschiedlichen $R^1$-Gruppen entsprachen, praktisch gleich.

**Beispiel 14**

Die Verbindung Nr. 1 von Tabelle I wurde auch nach folgender Methode hergestelt:
Zu 350 ccm Toluol gibt man 10 g (36,5 mM) p-(4-trans-n-Pentylcyclohexyl)-benzoesäure, 5,3 g (36,5 mM 2,4-Di-cyanophenol, 0,25 g konzentrierte Schwefelsäure und 0,15 g Borsäure. Man hält die Lösung 120 Std. am Rückfluss, wobei man das bei der Reaktion gebildete Wasser abzieht. Dann wird das Toluol abdestilliert. Man erhält Rohprodukt, das man chromatographisch an einer Kieselsäuresäule reinigt. Dabei erhält man 10 g reinen Stoff, d.h. man erzielt eine Ausbeute von 67 %.

Auch bei dieser Arbeitsweise können die der Verbindung Nr. 1 entsprechenden Homologen ($R^1 = H$ oder $R^1 = C_1$-$C_{12}$-Alkyl) durch Verwendung der entsprechenden Benzoesäurederivate erhalten werden.

Mit den erfindungsgemässen Verbindungen lassen sich vorteilhafte FK-Mischungen für die bekannten Feldeffektdrehzellen bilden. Vorzugsweise enthalten solche FK-Mischungen bis 25 Gew.-% mindestens einer Verbindung der Formel (1), vozugsweise 10 bis 20 Gew.-%. Die FK-Mischungen können aber mit Vorteil mehrere Verbindungen der Formel (1) z. B. in einem Gesamtanteil von bis zur Hälfte des Gewichtes der FK-Mischung enthalten.

**Patentansprüche**

1. Anisotrope Verbindungen der Formel (1)

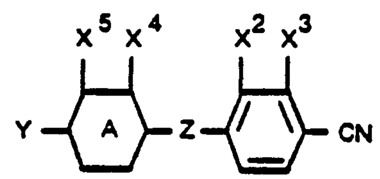

(1)

in welcher $X^2$ bis $X^5$ Wasserstoffatome, Halogenatome oder Nitrilgruppen sind mit der Maßgabe, daß mindestens eine dieser Gruppen ein Halogenatom oder die Nitrilgruppe ist, Z eine Kovalenzbindung oder die Carboxylgruppe -C(O)O-, der Kern A ein Benzol- oder trans-Cyclohexanring und Y eine Gruppe R,

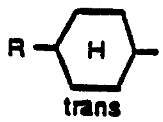

oder

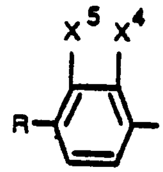

ist, worin R eine Alkylgruppe mit 1 bis 12 C-Atomen oder eine Alkoxygruppe mit 1 bis 12 C-Atomen ist und $X_4$ und $X_5$ Wasserstoffatome, Halogenatome oder Nitrilgruppen sind und Z die Carboxylgruppe -C(O)C- bedeutet, wenn der Kern A einen Benzolring und Y entweder eine Gruppe R oder

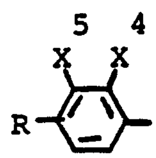

bedeutet.

2. Verbindung nach Patentanspruch 1, gekennzeichnet durch die Formel (2)

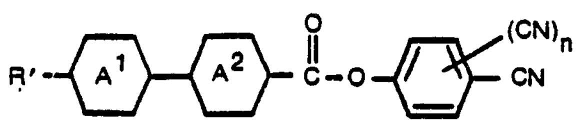

(2)

in der R' eine Alkyl-oder Alkoxygruppe mit 1-12 C-Atomen ist, die Ringe $A^1$ und $A^2$ gleich oder verschieden sind und Benzolringe oder trans-Cyclohexanringe bedeuten und n 1 oder 2 bedeutet.

3. Verbindung nach Patentanspruch 1, gekennzeichnet durch die Formel (3)

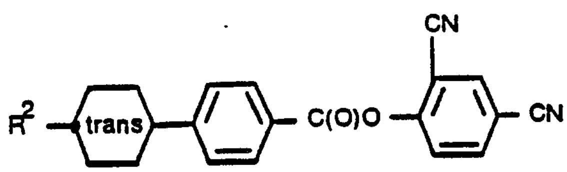

(3)

in der $R^2$ eine Alkylgruppe mit 1 bis 12 C-Atomen ist.

4. Verbindung nach Patentanspruch 3, gekennzeichnet, dass $R^2$ die n-Pentylgruppe bedeutet.

5. Verbindung nach Patentanspruch 1, gekennzeichnet durch die Formel (4)

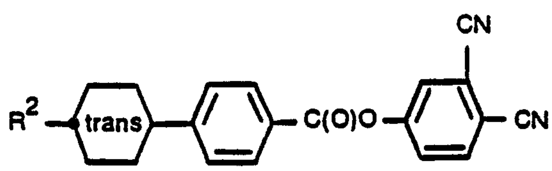

(4)

in der $R^2$ eine Alkylgruppe mit 1 bis 12 C-Atomen ist.

6. Verbindung nach Patentanspruch 5, dadurch gekennzeichnet, dass $R^2$ die n-Pentylgruppe bedeutet.

7. Verbindung nach Patentanspruch 1, gekennzeichnet durch die Formel (5)

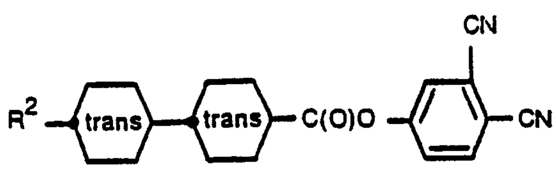

(5)

in der $R^2$ eine Alkylgruppe mit 1 bis 12 C-Atomen ist.

8. Verbindung nach Patentanspruch 7, dadurch gekennzeichnet, dass $R^2$ die n-Pentylgruppe bedeutet.

9. Flüssigkristallmischung, dadurch gekennzeichnet, dass sie mindestens eine Verbindung gemäss einem der

Patentansprüche 1-8 enthält.

10. Mischung nach Patentanspruch 9, dadurch gekennzeichnet, dass sie die mindestens eine Verbindung in einem Anteil von 10 bis 20 % des Gewichts der Mischung enthält.

11. Mischung nach Patentanspruch 10, dadurch gekennzeichnet, dass sie mehrere Verbindungen gemäss einem der Patentansprüche 1-8 in einem Gesamtanteil bis 50 % des Gewichts der Mischung enthält.

**Revendications**

1. Combinaisons anisotropes de la formule (1)

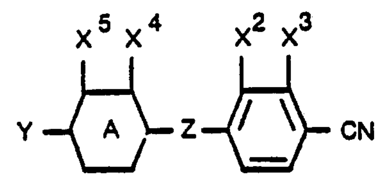

(1)

dans laquelle $X^2$ à $X^5$ sont des atomes d'hydrogène, des atomes d'halogène ou des groupes nitrile, un de ces groupes au moins étant un atome d'halogène ou le groupe nitrile, Z une liaison de covalence ou le groupe carboxyle -C(O)O-, le noyau A un cycle benzène ou trans-cyclohexane et Y un groupe R,

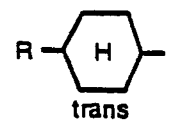

ou

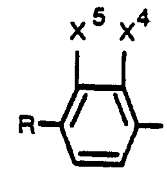

dans lequel R représente un groupe alkyle avec 1 à 12 atomes de C ou un groupe alcoxy avec 1 à 12 atomes de C, et $X_4$ et $X_5$ sont des atomes d'hydrogène, des atomes d'halogène ou des groupes nitrile et Z signifie le groupe carboxyle -C(O)O-, si le noyau A est un cycle benzène et Y signifie ou le groupe R ou

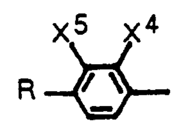

.

2. Combinaison selon la revendication 1, caractérisée par la formule (2)

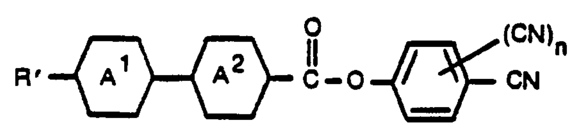

(2)

dans laquelle R' est un groupe alkyle ou alcoxy avec 1 à 12 atomes de C, les noyaux $A^1$ et $A^2$ étant identiques ou différents et représentent des noyaux benzène ou des noyaux trans-cyclohexane et n signifie 1 ou 2.

3. Combinaison selon la revendication 1, caractérisée par la formule (3)

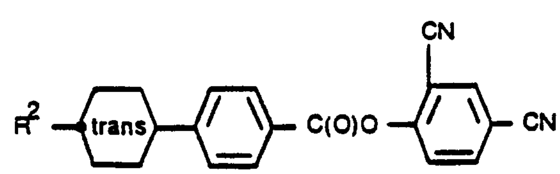

(3)

dans laquelle $R^2$ est un groupe alkyle avec 1 à 12 atomes de C.

4. Combinaison selon la revendication 3, caractérisée par le fait que $R^2$ représente le groupe n-pentyle.

5. Combinaison selon la revendication 1, caractérisée par la formule (4).

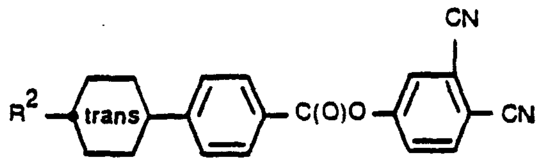

(4)

dans laquelle $R^2$ est un groupe alkyle avec 1 à 12 atomes de C.

6. Combinaison selon la revendication 5, caractérisée par le fait que $R^2$ représente le groupe n-pentyle.

7. Combinaison selon la revendication 1, caractérisée par la formule (5)

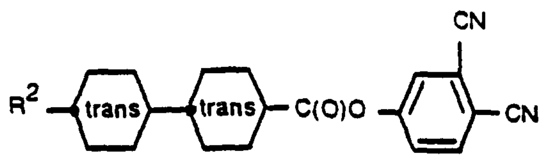

(5)

dans laquelle $R^2$ est un groupe alkyle avec 1 à 12 atomes de C.

8.Combinaison selon la revendication 7, caractérisée par le fait que $R^2$ représente le groupe n-pentyle.

9. Mélange de cristaux liquides, caractérisés par le fait qu'il renferme au moins une combination selon une des revendications 1 à 8.

10. Mélange selon la revendcation 9 , caractérisé par le fait qu'il renferme au moins une combinaison dans une proportion de 10 à 20 % du poids du mélange.

11. Mélange selon la revendicaton 10, caractérisé par le fait qu'il renferme plusieurs combinaisons selon une des revendications 1 à 8, dans une proportion totale allant jusqu à 50 % du poids du mélange.

**Claims**

1. Anistropic compounds of the formula (1)

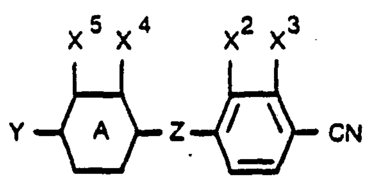

(1)

in which $X^2$ to $X^5$ are hydrogen atoms, halogen atoms or nitrile groups, wherein at least one of these groups is a halogen atom or the nitrile group, Z is a covalent bond or the carboxyl group -C(O)O-, the ring A is a benzene or trans-cyclohexane ring and Y is a group R,

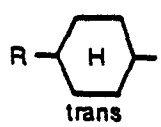

or

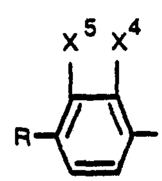

wherin R is alkyl having 1 to 12 carbon atoms or alkoxy having 1 to 12 carbon atoms, and $X^4$ and $X^5$ are hydrogen, halogen atoms or nitrile groups and Z is the carboxyl group -C(O)O-, if the ring A is a benzene ring and Y is either a group R or

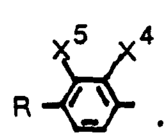

.

2. The compounds of claim 1, having the formula (2)

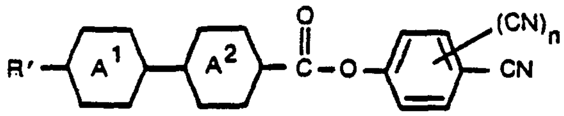
(2)

wherein R' is an alkyl or alkoxy group having 1 to 12 carbon atoms, the rings $A^1$ and $A^2$ are identical or different and are benzene or trans-cyclohexane rings, and n is 1 or 2.

3. The compounds of claim 1, having the formula (3)

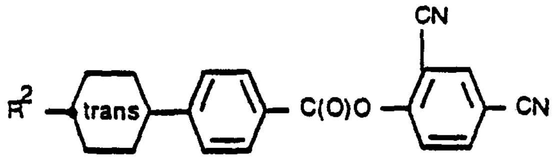
(3)

wherein $R^2$ is an alkyl group having 1 to 12 carbon atoms.

4. The compound of claim 3, wherein $R^2$ is the n-pentyl group.

5. The compounds of claim 1, having the formula (4)

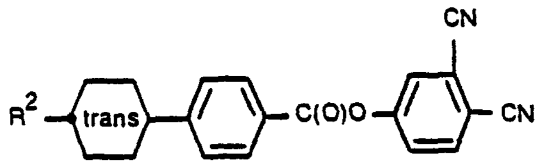
(4)

wherein $R^2$ is an alkyl group having 1 to 12 carbon atoms.

6. The compound of claim 5, wherein $R^2$ is the n-pentyl group

7. The compounds of claim 1 having the formula (5)

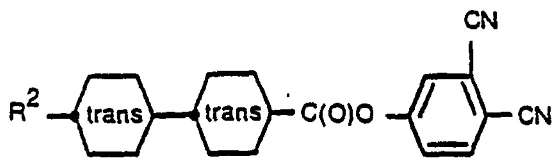
(5)

wherein $R^2$ is an alkyl group having 1 to 12 carbon atoms.

8. The compound of claim 7, wheren $R^2$ is the n-pen

9. A liquid crystal composition which comprises as components at least one compound of claims 1-8.

10. The composition of claim 9 which comprises as components at least one compound in a portion of 10 to 20 % by weight of the composition.

11. The compositon of claim 10 which comprises several compounds of claims 1-8 in a total portion of up to 50 % by weight of the composition.